# EUROPEAN PATENT APPLICATION

(11) **EP 3 659 930 A1**
(43) Date of publication of application: **03.06.2020**
(21) Application number: 19211708.3
(22) Date of filing: 27.11.2019
(51) Int. Cl.: B64F 1/18

(54) **APPARATUS FOR PRESENTING INFORMATION TO AN AIRBORNE AIRCRAFT AND METHOD OF USING THE SAME**

(30) Priority: 30.11.2018 GB 201819575
(71) Applicant: Allied Kinetic Limited, London, Greater London W1F 7LD (GB)
(72) Inventor: GOODMAN, David Jeremy, London, Greater London W1F 7LD (GB)
(74) Representative: Gaunt, Thomas Derrick

(57) **Abstract**

Apparatus (1) suitable for presenting information to an airborne aircraft (20). The apparatus (1) comprises an electronic visual display (2) configured to be positioned with a substantially horizontal orientation proximate to a landing area (30) for the aircraft (20). An interface (5) is configured to receive sensor data from one or more meteorological sensors (4). A controller (3) is operatively connected to the display (2) and to the interface (5) and is configured to cause the display (2) to display information relating to the sensor data (4).

## Description

### Field

The present application relates to apparatus for presenting information to an airborne aircraft, particularly a rotary-wing aircraft.

### Background

Rotary-wing aircraft, particularly helicopters, have many uses: transportation of people and cargo, military, law enforcement, search and rescue, medical transport, tourism, news and media, construction, agriculture, aerial observation, and so forth.

Helicopters have the ability to land and take off vertically, to hover, and to move at low airspeeds. Hence helicopter landing areas can be easily provided at various locations. This has obvious benefits. However, in contrast to airports which generally have facilities for providing information, instructions, etc. to pilots, these landing areas often have limited or no such facilities. This is particularly true for landing areas that are less used, more remote, etc. Meanwhile, takeoff and landing are generally the most critical phases of a flight.

### Summary

According to an aspect of the present invention, there is provided apparatus suitable for presenting information to an airborne aircraft. The apparatus comprises: an electronic visual display configured to be positioned with a substantially horizontal orientation proximate to a landing area for the aircraft; an interface configured to receive sensor data from one or more meteorological sensors; and a controller operatively connected to the display and to the interface. The controller is configured to cause the display to display information relating to the sensor data.

Thus, the apparatus may provide an alternative, economical and/or effective way of presenting information to aircraft that may increase a pilot's situational awareness during the critical phases of flight, including their knowledge of local meteorological conditions.

The apparatus is suitable for presenting information to an airborne aircraft, for example an aircraft that is at height of up to about 500 feet (150 metres). Such an aircraft may be, for example, approaching to land. Typically, the apparatus can also present information to a non-airborne aircraft, e.g. an aircraft on the landing area preparing to take off.

The apparatus is particularly suitable for presenting information to rotary-wing aircraft such as helicopters. During an approach to landing, such an aircraft is naturally positioned (or can easily be positioned) so as to be presented with the information. However, the apparatus can also present information to other types of aircraft such as fixed-wing aircraft. Moreover, the aircraft may be unmanned aerial vehicles (UAVs) of any type. An aircraft may be defined as any device that is used for flight in the air.

The displayed information is typically intended for use by one or more persons (hereinafter generally referred to as the 'recipient'). The recipient is typically, but not necessarily, a pilot of the aircraft. The information is typically displayed such that it is visible to the unaided eye of the recipient who is aboard the aircraft. However, in some instances, the displayed information may only be visible via an onboard instrument, e.g. a video camera, night vision device, etc. As will be appreciated, this applies to UAVs. Alternatively or additionally, the displayed information may be recognised by a computer-based device and then used in any suitable way. Accordingly, the displayed information may be in a human-readable and/or a machine-readable (e.g. two-dimensional barcode) format.

As will be appreciated, the substantially-horizontally-oriented display will be substantially upwards facing. The direction faced by the display may correspond, for example, to a centre of a cone of visibility of the display.

The display may be generally planar. For example, the display may have a viewable surface that is planar (or can be approximated by a plane) over at least a major part of the area thereof.

The display may be configured with an orientation that is not exactly horizontal. For example, the display may be inclined at an angle of up to 5° or up to 10° or up to 20° relative to the horizontal plane. Such a configuration may be used, for example, to extend visibility in a particular horizontal direction corresponding to a direction from which aircraft typically approach the landing area.

At least one of the sensors may be an anemometer and at least some of the information may relate to wind speed proximate to the landing area. At least one of the sensors may be a wind vane and at least some of the information may relate to wind direction proximate to the landing area. At least one of the sensors may be a barometer and at least some of the information may relate to atmospheric pressure proximate to the landing area. Such information can be particularly useful for a pilot during takeoff and/or landing.

The apparatus may further comprise one or more devices. The controller may be operatively connected to the one or more devices and configured to (i) receive incoming data via one or more of the devices and to control operation of the display based at least in part on the incoming data and/or (ii) cause one or more of the devices to provide outgoing data relating to at least some of the information displayed on the display.

At least one of the devices may be a user interface.

At least one of the devices may be connectable to a mobile network to receive messages comprising at least some of the incoming data and/or to send messages comprising at least some of the outgoing data. The incoming data in the messages may include one or more commands and may contain one or more parameters associated with each command.

At least one of the devices may be connectable to the internet to receive at least some of the incoming data and/or to provide at least some of the outgoing data. The apparatus may be configured to provide a web interface.

One or more persons (hereinafter generally referred to operators) may seek to control operation of the display and/or obtain the information to which the outgoing data relates. An operator may be the above described recipient, a person responsible for running the apparatus, or another suitable person.

The apparatus may be configured to authenticate and/or authorise an operator.

At least one of the devices may be configured to receive radio frequency (RF) signals (and/or embedded data) transmitted by the aircraft comprising at least some of the incoming data. The RF signals (and/or the embedded data) may comprise an identifier of the aircraft or of an emergency situation. The controller may be configured to control operation of the display in dependence on the identifier.

Thus, operation of the display can be easily, remotely and/or automatically controlled. Among other things, control can be exercised from the aircraft. This, in turn, can enable more responsive presentation of information by the display, greater power efficiency, etc.

Furthermore, at least some of the information displayed on the display can be obtained in a different way, e.g. from a remote location.

Controlling operation of the display may comprise switching the display on or off, causing the display to display particular information, etc.

The apparatus may be configured to also display other (useful) information. For example, the apparatus may be configured to display information relating to a status and/or identity of the landing area.

The apparatus may comprise a further display for presenting information to a person on the ground. The controller may be configured to cause the further display to display at least some of the information displayed on the display. For example, such a further display may be readily viewable by a pilot not aboard an aircraft.

The controller may be configured to control operation of one or more external devices (e.g. landing lights or floodlights) in response to at least some of the incoming data.

The apparatus may comprise a mount to enable the display to be mounted on a surface. The surface may be substantially horizontal. The mount may comprise one or more legs. The mount may comprise a single leg attached to the display via a joint which allows an angle of the display relative to the leg to be adjusted. The mount may comprise a plurality of legs, each of which has an adjustable length. Thus, the display can be positioned and/or orientated more easily, safely and/or securely.

The apparatus may comprise a system configured to avoid or remove snow, ice, water and/or dirt on a surface overlying the front of the display. Thus, the display may be more visible in certain conditions.

The display may be made up of a plurality of interconnectable units. Each unit may have a size that facilitates transportation.

The display may be configured to present the information by way of non-visible, e.g. infrared, light. Thus, for example, the information may only be visible by way of a night vision device or the like. This may be advantageous in certain circumstances such as when there is a need for stealth.

According to a further aspect of the present invention, there is provided a method of using the apparatus. The method comprises: positioning the display with a substantially horizontal orientation proximate to the landing area for the aircraft; causing the interface to receive the sensor data from the one or more meteorological sensors; and causing the display to display the information relating to the sensor data.

### Brief Description of the Drawings

Certain embodiments of the present invention will now be described, by way of example, with reference to the accompanying drawings, in which:
Figure 1 illustrates certain electronic components of an apparatus for presenting information to an airborne aircraft;
Figure 2A illustrates certain mechanical components of the apparatus of Figure 1 with one example of a mount;
Figure 2B illustrates certain mechanical components of the apparatus of Figure 1 with another example of a mount;
Figure 3 illustrates the apparatus of Figure 1 in situ;
Figure 4 illustrates a controller included in the apparatus of Figure 1;
Figure 5 illustrates operations which may be carried out by the apparatus of Figure 1;
Figures 6A-D illustrate information that may be presented by a display included in the apparatus of Figure 1;
Figure 7 illustrates a version of the apparatus of Figure 1 with interconnectable units; and
Figure 8 illustrates a communication method using a version of the apparatus of Figure 1.

### Detailed Description

### Apparatus

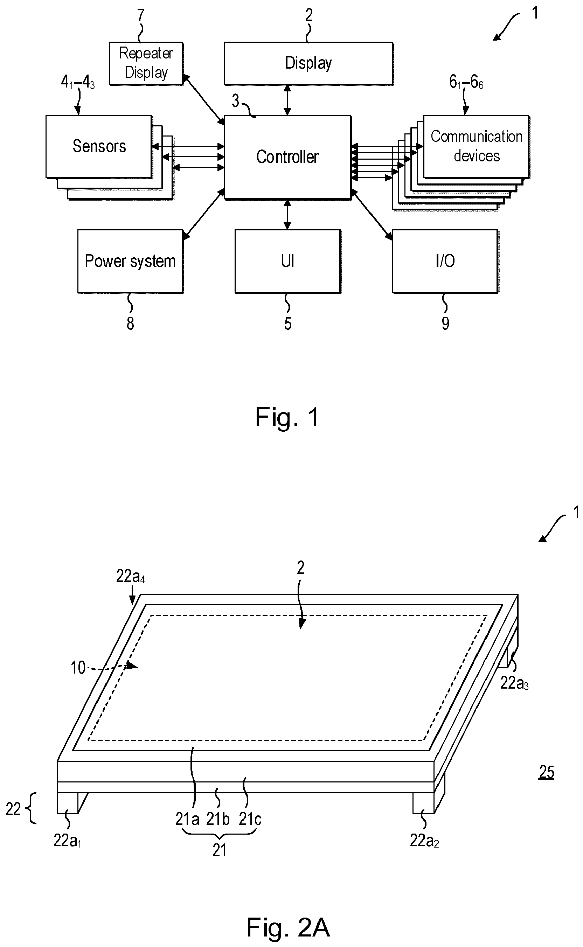

Referring to Figures 1- 6, an example of an apparatus 1 for presenting information to an airborne aircraft 20 will now be described.

Referring in particular to Figure 1, the apparatus 1 has several electronic components including a display 2, a controller 3, a set of meteorological sensors 4, a user interface 5, a set of communication devices 6, a 'repeater' display 7, a power system 8, and an input/output 9. The controller 3 communicates with the other electronic components 2-8 via (wired and/or wireless) connections 9.

### Display

The display 2 is an electronic visual display and, more specifically, a light-emitting diode (LED) display, i.e. a display with a plurality of LEDs corresponding to an array of pixels. In other examples, the display 2 may be another type of display, e.g. a liquid crystal display (LCD), a projector and a projection screen, an electronic-ink based display, an electromechanical (e.g. flap) display, etc.

The display 2 is relatively large. For example, the display 2 may have an area of more than 1 m² or more than 5 m² or more than 10 m². The display 2 may be made up of a plurality of modules. The display 2 may have any suitable pixel pitch. Information displayed on the display may have any suitable x-height. The display 2 may be colour or black and white. The display 2 may have any suitable brightness. The brightness may be adjustable.

The display 2 typically presents the information by way of visible light. However, in some examples, the display 2 may alternatively or additionally present the information by way of non-visible (e.g. infrared) light. This may be achieved, for example, using suitable LEDs.

In this example, the display 2 is flat, i.e. planar.

### Mechanical components

Referring in particular to Figures 2A-B, the apparatus 1 has several mechanical components, including an enclosure 21 and a mount 22.

The enclosure 21 encloses the display 2. In this example, the enclosure 21 also encloses or supports the other electronic components 3, 4₁-4₂, 5, 6₁-6₃. In other examples, one or more of the other electronic components 3, 4₁-4₂, 5, 6₁-6₃ may be positioned elsewhere e.g. in separate enclosures.

The enclosure 21 may have any suitable form. In this example, the enclosure 21 includes a front section 21a, a back section 21b and a frame 21c. The front and back sections 21a, 21b are substantially rectangular plates covering the front and back of the display 2, respectively. The front section 21a is transparent at least where it overlies the display 2. The frame 21c connects the front and back sections 21a, 21b, thereby forming the enclosure 21.

The enclosure 21 may prevent harmful ingress of water. For example, the enclosure 21 may be have an IPX5 or IPX6 rating or better.

The enclosure 21 may be configured such that any water (e.g. rainwater) drains off the enclosure 21 in a suitable manner. For example, the front section 21a may have an inclined outer surface.

In other examples, the display 2 may be such that at least a part of the enclosure 21 (e.g. the front section 21a) may be omitted.

The mount 22 is configured to enable the display 2 to be mounted with a substantially horizontal (upwards-facing) orientation on one or more surfaces. In this example, the mount 22 enables the display 2 to be mounted on a surface 25 that is also substantially horizontal. The surface 25 may correspond to the ground, a rooftop, a deck of a ship, etc.

The surface 25 may be inclined (i.e. at an angle relative to the horizontal plane) and/or uneven. Moreover, as explained above, it may be desirable for the display 2 to be inclined regardless of the orientation of the surface 25. Hence, in some examples, the mount 22 allows for a range of orientations of the display 2 relative to the surface 25 and/or allows for unevenness of the surface 25.

Furthermore, the surface 25 may be subject to extreme temperatures, moisture, etc. Hence, in some examples, the mount 22 is configured to physically separate the display 2 from the surface 25 by a sufficient distance.

The mount 22 may have any suitable form. In the example illustrated in Figure 2A, the mount 22 includes several (e.g. four) legs 22a₁₋₄. The legs 22a₁₋₄ are attached to the enclosure 21 at different positions (e.g. the corners). When the display 2 is in a substantially horizontal (upwards-facing) orientation, the legs 22a₁₋₄ extend downwards. Each of the legs 22a₁₋₄ has an adjustable length. Each of the legs 22a₁₋₄ may be directly or indirectly attachable to the surface 25, e.g. by a fastener. Each of the legs 22a₁₋₄ may have a foot (not shown).

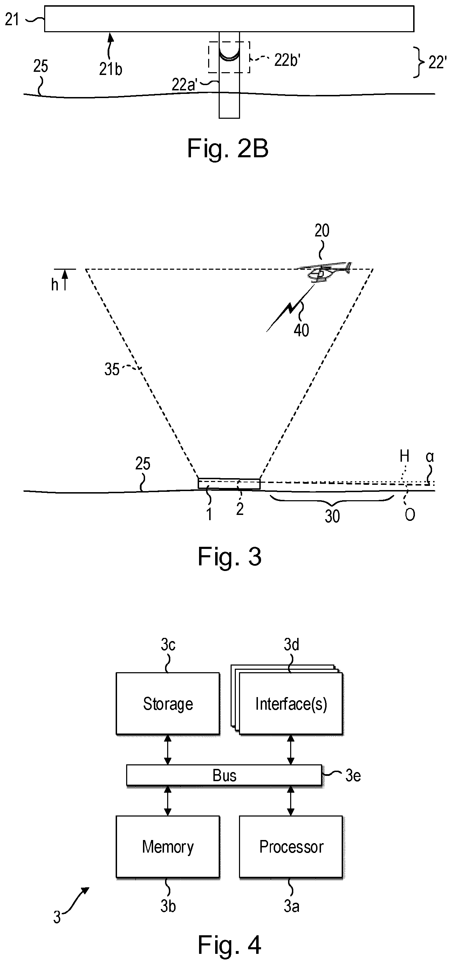

In the example illustrated in Figure 2B, the mount 22 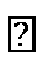 includes a single leg 22a 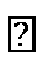 . The leg 22a 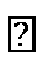 is attached to the back section 21b of the enclosure 21 at a substantially central position thereof. The leg 22a includes, or is connected to the back section 21b of the enclosure 21 via, a joint 22b 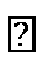 . The joint 22b 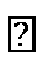 is configured to allows the relative orientation of the leg 22a 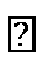 and the enclosure 21 (and hence the display 2) to be varied. In this example, the joint 22b 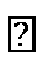 is a (lockable) ball and socket joint, although other types of joints may also be used. Hence, the leg 22a 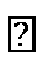 can be fixed in a substantially vertical orientation, for example by being driven into the ground, and the orientation of the display 2 can then be adjusted as appropriate.

In some examples, the mount 22 may be an integral part of the enclosure 21. In some examples, the mount 22 may be omitted.

### Systems to maintain visibility

The apparatus 1 preferably includes one or more systems to maintain visibility of the display 2. For example, the apparatus 1 may include a system to avoid or remove snow, ice and/or water (e.g. condensation) on the front section 21a of the enclosure 21, at least where it overlies the display 2. Such a system preferably includes a heater 23. The heater 23 may be a wire or a transparent film or coating attached to the front section 21a to which an electrical current is selectively applied. The heater may be an internal or external hot air blower unit or similar. The front section 21a may include self-cleaning glass.

### Typical use

Referring in particular to Figure 3, in typical use, the apparatus 1 and hence the display 2 is positioned proximate to a landing area 30 (or to multiple landing areas). For example, the display 2 may be positioned within ∼1-5 m of an edge of the landing area 30. The display 2 has a substantially horizontal orientation. In particular, the display 2 (which, in this example, is planar) lies in a plane O that is at an angle α relative to the horizontal plane H that is zero or relatively small (e.g. <20°).

Generally, the apparatus 1 is configured to present information to an aircraft 20 within a particular region 35. The extent of the region 35 will depend, for example, on characteristics of the display 2 (e.g. inclination, size of the information displayed on the display 2, brightness, contrast, viewing angle), conditions (e.g. light levels, visibility) and how the information is being viewed (e.g. with or without an instrument).

In some examples, the apparatus 1 is configured to present information so as to be visible to a person on an aircraft 20 at a height h of up to -500 feet (150 metres) relative to the display 2. This may apply in a range of different light levels (e.g. from bright sunlight to complete darkness) and when visibility is above a particular level (e.g. moderate or good).

As will be explained in more detail below, a person aboard the aircraft 20 and/or the aircraft 20 itself may be able to communicate directly or indirectly with the apparatus 1. This is illustrated in the figure by feature 40.

### Controller

Referring in particular to Figure 4, the controller 3 corresponds to a system on a chip (SoC) or another suitable type of computer. The controller 3 includes a processor 3a, memory 3b, storage 3c, and one or more interfaces 3d. The processor 3a communicates with the other components 3b-3d via a system bus 3e.

The processor 3a may have one or more processing units.

The memory 3b includes non-volatile memory (e.g. read-only memory) which is used, for example, to boot the controller 3. The memory 3b also includes volatile memory (e.g. random-access memory) which is used, for example, by the processor 3a for the temporary storage of data when carrying out the operations described herein.

The storage 3c is, for example, solid state storage. The storage 3c stores computer-readable instructions which, when executed by the processor 3a, cause the controller 3 to carry out the operations described herein. The storage 3c also stores data which are used in relation to these operations.

The interfaces 3d are used to communicate with the display 2, the sensors 4₁-4₂, the user interface 5 and the communication devices 6₁-6₃. The interfaces 3d may include a HDMI (High-Definition Multimedia Interface) interface, a USB (Universal Serial Bus) interface, a general-purpose input/output (GPIO) interface and/or one or more other types of interface.

### Meteorological sensors

Referring in particular to Figure 1, in this example, the apparatus 1 includes three meteorological sensors 4₁, 4₂, 4₃.

The first sensor 4₁ is an anemometer (and is hereinafter referred to as such). The anemometer 4₁ may be of any suitable type, e.g. cup, vane, ultrasonic, etc. The anemometer 4₁ measures wind speed and provides corresponding data (hereinafter referred to as 'sensor data') to the controller 3. The anemometer 4₁ may have any suitable position relative to the rest of the apparatus 1. In this example, the anemometer 4₁ is separate from the enclosure 21 and so can be positioned, for example, some distance (e.g. up to ∼50 m) from the display 2.

The second sensor 4₂ is a wind vane (and is hereinafter referred to as such). The wind vane 4₂ may be of any suitable type. The wind vane 4₂ measures wind direction and provides corresponding sensor data to the controller 3. The wind vane 4₂ may be co-located with the anemometer 4₁ or may be in another suitable location.

The third sensor 4₃ is a barometer (and is hereinafter referred to as such). The barometer 4₃ may be of any suitable type, e.g. a MEMS (microelectromechanical systems) barometer. The barometer 4₃ measures atmospheric pressure and provides corresponding sensor data to the controller 3. In this example, the barometer 4₃ is included within the enclosure 21 and, for example, is in fluid communication with the atmosphere via an opening in the back section 21b of the enclosure 21. In other examples, the barometer 4₃ may be in another suitable location.

The apparatus 1 may include one or more different sensors 4 to measure e.g. temperature, humidity, cloud cover, rainfall and/or sunlight. These sensors 4 may be included as alternatives to, or in addition in to, one or more of the abovedescribed sensors 4₁-4₃. In some examples, one or more of the sensors 4 may form part of a weather station.

The connections 9 between the controller 3 and the sensors 4₁-4₃ may be of any suitable type. For example, the connections 9 may be wired connections or wireless connections (e.g. Bluetooth, Zigbee, WiFi, LoRa, etc.). In the case of a wireless connection 9, this may be made via a communication device 6 (e.g. using LoRa).

### User interface

The user interface 5 includes one or more inputs (e.g. one or more buttons, a keyboard, a pointing device, etc.) and/or outputs (e.g. one or more lights, a speaker, a 'UI' display, etc.). As will be explained in more detail below, the user interface 5 allows an operator to configure and/or control operation of the apparatus 1.

In some examples, the user interface 5 may be minimal or may be omitted.

### Communication devices

In this example, the apparatus 1 includes six communication devices 6₁-6₆.

The first communication device 6₁ enables the controller 3 to communicate via one or more mobile networks. The mobile networks may include 2G (e.g. GSM), 2.5G (e.g. GPRS), 3G (e.g. UMTS), 4G (e.g. LTE-Advance) and/or 5G networks.

The first communication device 6₁ enables the controller 3 to communicate via the internet with further devices. These further devices may be computers, portable devices, etc. As will be explained in more detail below, the controller 3 may provide a web interface to allow an operator to use a web browser running on a further device to control operation of e.g. the display 2 and/or to obtain information from the apparatus 1. Alternatively or additionally, the controller 3 may communicate with a specific software application (hereinafter referred to as the 'remote software') running on a further device to allow an operator to carry out such actions.

Furthermore, the first communication device 6₁ is associated with a mobile telephone number and is able to send and/or receive messages (e.g. text messages (such as SMS messages), other types of messages or other types of data transmissions) to and from mobile devices. As will be explained in more detail below, the controller 3 may control operation of the display 2 in response to messages or may provide information to a mobile device via messages. Such a mobile device may be operated by a person aboard the aircraft 20. In some examples, an SMS interface or the like may be used to receive messages from mobile devices and communicate corresponding data to the controller 3 via the internet.

The second communication device 6₂ corresponds to a wireless (e.g. WiFi) network interface which enables the controller 3 to communicate via one or more wireless networks.

The third communication device 6₃ corresponds to a short range wireless communication (e.g. Bluetooth) interface which enables the controller 3 to communicate via Bluetooth or the like.

The second and third communication devices 6₂, 6₃ are particularly for enabling the controller 3 to communicate with further devices such as computing devices or mobile devices. This is so as to allow an operator of such devices to configure and/or control operation of the apparatus 1 as an alternative to, or in addition to, the above described user interface 5.

The fourth communication device 6₄ corresponds to a LoRa interface. LoRa is a wireless communication IOT technology which uses various sub-gigahertz radio frequency bands and enables very-long-range transmissions (>10 km in rural areas) with low power consumption. LoRa may be used to communicate with one or more of the sensors 4₁-4₃. Furthermore, LoRa may also be used to communicate with further devices which may be used to control operation of the display 2 or to obtain information from the apparatus 1.

The fifth communication device 6₅ corresponds to a global navigation satellite system (GNSS) receiver. The GNSS may correspond to the Global Positioning System (GPS) or any other GNSS. The fifth communication device 6₅ is particularly for enabling the controller 3 to receive time information which is used for various purposes.

The sixth communication device 6₆ enables the controller 3 to receive RF signals transmitted by an aircraft 20. The RF signals are typically Mode-S automatic dependent surveillance - broadcast (ADS-B) signals (and are hereinafter generally referred to as ADS-B signals). The ADS-B signals include a callsign, i.e. an identifier of the aircraft 20 or, on occasions, of an emergency situation. As will be explained in more detail below, the controller 3 can control operation of the display 2 in dependence on the call sign.

In some examples, one or more of the communication devices 6₁-6₆ may be omitted. The functions of one or more of the communication devices 6₁-6₆ may be performed by other communication device(s) 6.

### Repeater display 7

The repeater display 7 is for presenting information e.g. to a person on the ground 25 in the vicinity of the landing area 30. Accordingly, the repeater display 7 may be relatively small (compared to the display 2) and positioned with a substantially vertical (sideways-facing) orientation. The repeater display 7 may be, for example, an LCD display. The repeater display 7 may display the same information as the display 2. Alternatively, the repeater display 7 may display more or less information than the display 2. The repeater display 7 may display information in a different way to the display 2.

### Power system 8

The power system 8 preferably corresponds to a relatively low voltage system, i.e. receives low-voltage electrical power. The electrical power may originate from an external source such as the electrical grid, a generator, a solar power system, an external battery, etc. The power system 8 preferably includes one or more batteries to store power. The power system 8 may include a first battery for use by the electrical components of the apparatus 1 apart from the display 2. Hence, the first battery may be used, for example, for obtaining sensor data and/or for communications. The power system 8 may include a second, higher capacity battery for use by the display 2. Alternatively or additionally, the power system 8 may be able to activate an external source of power, e.g. a generator, in response to an incoming communication or user input.

### Input/output 9

The input/output 9 corresponds to a set of connectors to enable the controller 3 to send/receive signals to/from one or more external devices. For example, an external device may be a set of landing lights or floodlights. As will be explained in more detail below, the controller 3 may allow an operator to switch on or off these lights e.g. remotely. Other examples of external devices that may be connected to the input/output 9 include water sensors, etc.

### Operations

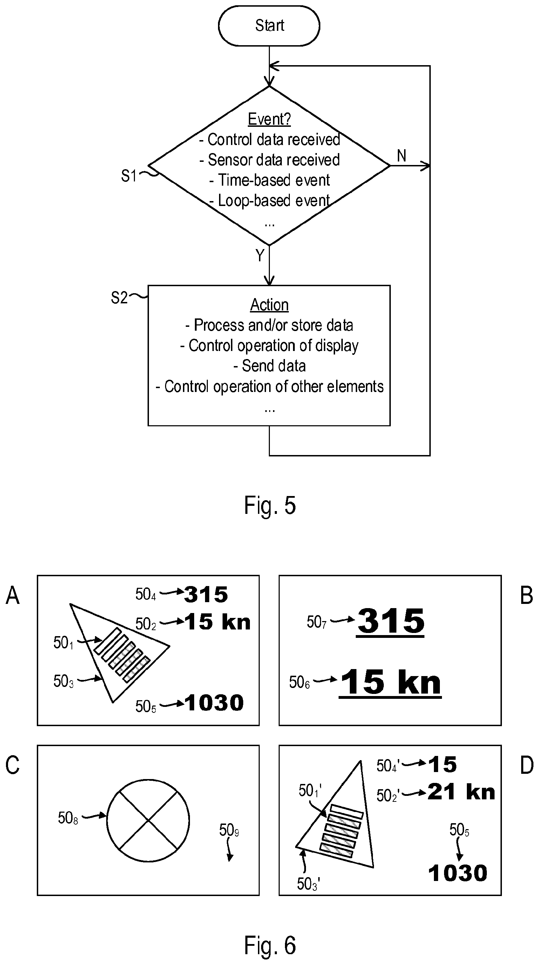

Referring to Figure 5, certain operations which may be carried out by the apparatus 1 will now be described.

In brief, these operations involve the controller 3 determining whether certain events (denoted by 'S1') have occurred and, if so, carrying out certain actions (denoted by 'S2').

One type of event S1 is that a particular type of data (hereinafter referred to as 'control data') has been received. As will be explained in more detail below, control data is for controlling operation of the apparatus 1.

Control data is received via the user interface 4, a communication device 6, etc.

Control data may be directly or indirectly provided by an operator (which may be a person or a computing device).

The controller 3 preferably authenticates and authorises the source of control data. This may be carried out in any suitable way. For example, operators may be required to login with a username and password, groups of operators may have particular rights (e.g. different levels of control over operation of the apparatus 1), etc.

In response to receiving control data, the controller 3 may carry out several different actions S2. For example, the controller 3 may control operation of the display 2.

For some types of control data, this may involve switching the display 2 on or off or causing the display 2 to present particular information (hereinafter referred to as 'displayed information').

Such actions S2 may be carried out immediately in response to receiving the control data. Alternatively, the control data may specify that such actions S2 are to be carried out at future times or in response to future events such as receiving other control data, etc. Hence, as will be appreciated, the controller 3 may store a schedule, a set of rules, etc. relating to such actions. Furthermore, such actions may be carried out in response to time-based events, e.g. determining that it is a particular date and/or time. This preferably involves using timing information received from the GNSS receiver 6₅.

The extent to which it is desirable for the display 2 to be kept on may depend on factors such as expected takeoffs and landings, availability of power, restrictions on light output, etc. The display 2 may be kept on for all or some or none of the time and this may be overridden by (further) control data, etc.

At least some of the displayed information relates to sensor data, i.e. data received from the anemometer 4₁, wind vane 4₂ and/or the barometer 4₃. Some of the displayed information may also relate to other things such as the status of the landing area 30 (e.g. open or closed), the identity of the landing area 30, branding, messages, etc. Data relating to this information may be stored in the controller 3.

The displayed information is made up of one or more parts 50 (hereinafter referred to as 'display elements') (see Figures 6A-D). The display elements 50 may be displayed simultaneously and/or in a timed sequence. The display elements 50 may represent:
- wind speed (e.g. a number (knots) and/or a scale)
- wind direction (e.g. letters or a number representing a cardinal direction ('NW' or '315°') and/or an arrow)
- atmospheric pressure (e.g. a number (millibars) and/or a scale)
- a status of the landing area 30 (e.g. a word ('open', etc.) or a suitable symbol)
- an identity of the landing area 30 (e.g. a number)
- other information (e.g. characters, symbols, images/videos, two-dimensional barcodes, a warning about water on the ground, etc.)

Figure 6A illustrates an example of the information which may be presented by the display 2. In this instance, there are five (numerical and symbolic) display elements 50₁-50₅, two of which 50₁, 50₂ represent wind speed, two of which 50₃, 50₄ represent wind direction and one of which 50s represents atmospheric pressure. In this example, wind direction is represented by an arrow 50₃ pointing in the actual direction of the wind (in this instance, the display 2 is orientated so that north is upwards, although this need not be the case).

Figure 6B illustrates another example of the information which may be presented by the display 2. In this instance, there are only two (numerical) display elements 50₆, 50₇ representing wind speed and wind direction, respectively. As illustrated in the figure, a display element 50, particularly when it is numerical, may include an indication of its orientation.

Figure 6C illustrates another example of the information which may be presented by the display 2. In this instance, there is a display element 50₈ indicating the status of the landing area 30, i.e. closed, and a display element 50₉ identifying the landing area 30, i.e. as 'spot 1'.

Similar considerations apply in relation to the repeater display 7.

In some instances, the controller 3 may send data back to the source of the control data, e.g. to the user interface 5 or to a further device connected to the controller 3 via a suitable communication device 6₁-6₄. Such data may be to assist an operator in the provision of control data. Alternatively or additionally, such data may include data about the status of the apparatus 1, data relating to the displayed information (e.g. meteorological sensor data), etc.

Where the control data corresponds to a message (e.g. a text message) from a mobile device, controlling operation of the display 2 may involve the following:
The controller 3 may determine whether the message is from an authorised operator, e.g. by checking whether the originating mobile number is in a list of authorised numbers (stored e.g. in the storage 3c). Alternatively or additionally, it may also involve analysing the message body to determine whether it includes a valid identifier, password, etc.

The controller 3 may analyse the message body to determine the operations that are to be carried out. This may involve parsing the message body. The message body may include one or more commands, each of which may have one or more associated parameters. For example, the text 'DISPLAY:ON' may correspond to a command to switch on the display 2, the text 'MODE:5' may correspond to a command to cause the display 2 to display a previously specified set of display elements (labelled '5'), etc.

In some instances, the controller 3 may send a message reply to the mobile device once the control operation has been completed or in case of an error, etc.

In some instances, the message from the mobile device may request data from the apparatus 1 (e.g. about its status, displayed information, meteorological information, etc.) which may be provided by the controller 3 in a reply.

Where the control data corresponds to an ADS-B signal from an aircraft 20, controlling operation of the display 2 may involve the following:
The controller 3 may obtain the call sign from the ADS-B signal and look it up in a table (stored e.g. in the storage 3c) that associates each of a set of call signs with one or more actions. If the call sign is found in the table, then the associated actions are selectively carried out. For example, the controller 3 may switch on the display 2 for particular call signs. The controller 3 may switch the display 2 off in the (continued) absence of particular call signs. The controller 3 may cause the display 2 to display particular display elements for particular call signs. For example, these display elements may correspond to preferred ways of presenting meteorological information, an aircraft-specific status of the landing area 30 (e.g. reserved, etc.), personalised messages, etc. The table may also include emergency call signs and the associated control operations may be intended to facilitate landing. The actions may also be dependent on the position of the aircraft 20 (relative to the apparatus 1). The position of the aircraft 20 may be determined from the ADS-B signal.

In response to receiving certain control data, the controller 3 may cause the display 2 to flash one or more times. The flashes may involve substantially all of the LEDs in the display 2. The flashes may help a pilot of the aircraft 20 to locate the landing area 30, e.g. when visibility is poor and/or in low light. In other words, the display 2 may act as a homing beacon.

Rather than controlling operation of the display 2, the controller 3 may also carry out other actions in response to receiving certain control data. For example, the controller 3 may control operation of other elements such as the power system 8, the heater 23, any external devices (e.g. landing lights or floodlights) connected to the input/output 9, etc.

Another type of event S1 is that sensor data has been received. As explained above, sensor data may be directly or indirectly provided by the anemometer 4₁, the wind vane 4₂ or the barometer 4₃.

In response to receiving sensor data, the controller 3 may carry out several different actions S2. For example, received sensor data may be processed (e.g. averaged, converted, etc.) and/or stored in the storage 3c. The controller 3 may update information displayed on the display 2 that relates to the sensor data, e.g. determine one or more updated display elements 50.

Figure 6D illustrates another example of the information which may be presented by the display 2. The information is similar to Figure 6A except that the wind speed and wind direction have changed and so the related display elements 50₁ 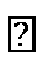 -50₄ 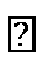 have been updated.

The display 2 may not be updated if, for example, the display 2 is off, the display 2 is not currently displaying related information, or the display 2 was recently updated, etc.

Where the sensor data is received from a water sensor e.g. connected to the input/output 9, the controller 3 may cause the display 2 to selectively display a suitable warning about water on the ground.

### Further version of the apparatus

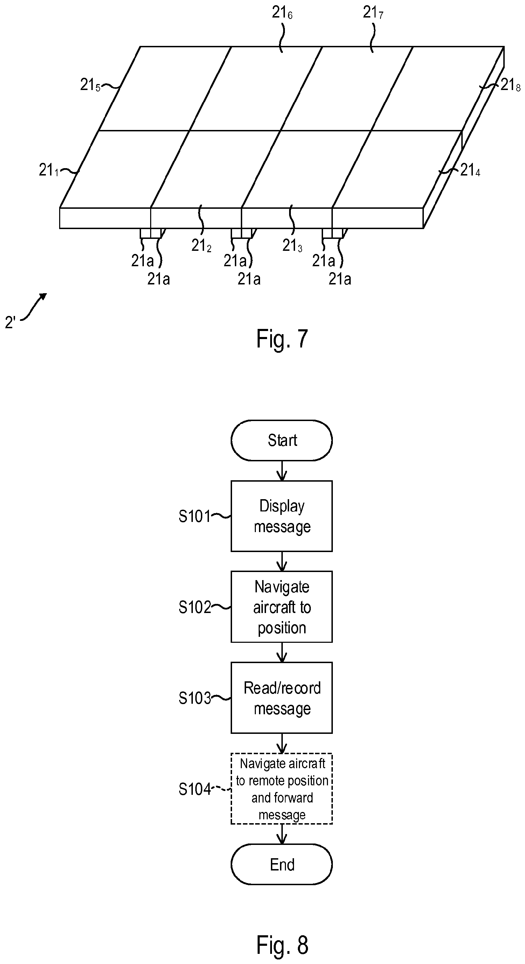

Referring to Figure 7, a further version apparatus will now be described.

This version of the apparatus is generally same as the above described apparatus 1 except that its display 20 is made of several (e.g. eight) interconnectable units 21₁-21₈. Each unit 21 may have a size that facilitates transportation. Each unit 21 may include one or more connectors 21a to allow the unit to be connected to, and disconnected from, one or more other units 21 and/or the controller 3. The enclosure (not shown) may also differ accordingly.

### Communication method

Referring to Figure 8, a communication method will now be described.

The method uses an apparatus that is the same as the above described apparatus 1 except that it may omit the meteorological sensors 4 and may not present any meteorological information.

The apparatus 1 is positioned with a substantially horizontal orientation (as described above) at a ('first') location.

At a first step S101, a message is displayed on the display 2. This may be achieved, for example, by an operator using the user interface 5. The message may have any content and may be in any format.

At a second step S102, an aircraft is navigated to an airborne position close to the first location. The aircraft may be a rotary- or fixed-wing aircraft, and may be manned or a UAV. The airborne position should be sufficiently close to the first location to enable the message to be read.

At a third step S103, the message is read and/or recorded at the aircraft.

In some examples, the information in the message is then used in any suitable way, e.g. by a person and/or a computer-based device.

In other examples, at a fourth step S104, the aircraft is navigated to a position remote from the first location and then the message is forwarded, e.g. by radio communications.

Thus, the method provides an alternative way of communicating a message which may be useful, for example, when radio communications are unsuitable at a particular location, i.e. the first location.

### Other variations

It will be appreciated that there may be many other variations of the abovedescribed embodiments.

For example, operations described as being carried out by the controller 3 may be carried out by other elements, including by one or more remote devices (e.g. in the cloud).

The apparatus 1 may be provided without any meteorological sensors 4.

One or more or all of the communication devices 6 may be omitted, as may the user interface 5, the repeater display 7, the input/output 9, etc.

The sixth communication device 6₆ may receive different RF signals from the aircraft 20. These RF signals may be transmitted by a transponder and the apparatus 1 may include a transmitter to provide an RF interrogation signal to the transponder.

## Claims

1. Apparatus for presenting information to an airborne aircraft, the apparatus comprising:
an electronic visual display configured to be positioned with a substantially horizontal orientation proximate to a landing area for the aircraft;
an interface configured to receive sensor data from one or more meteorological sensors; and
a controller operatively connected to the display and to the interface, the controller configured to cause the display to display information relating to the sensor data.

2. Apparatus according to claim 1, wherein the one or more sensors comprise:
an anemometer and at least some of the information relates to wind speed proximate to the landing area;
a wind vane and at least some of the information relates to wind direction proximate to the landing area; and/or
a barometer and at least some of the information relates to atmospheric pressure proximate to the landing area.

3. Apparatus according to claim 1 or 2 further comprising:
one or more devices;
wherein the controller is operatively connected to the one or more devices and is configured to (i) receive incoming data via one or more of the devices and to control the display based at least in part on the incoming data and/or (ii) cause one or more of the devices to provide outgoing data relating to at least some of the information displayed on the display.

4. Apparatus according to claim 3, wherein at least one of the devices is connectable to a mobile network or the internet to receive at least some of the incoming data and/or to provide at least some of the outgoing data.

5. Apparatus according to claim 4 configured to authenticate a person seeking to control operation of the display or obtain the information to which the outgoing data relates.

6. Apparatus according to claim 4 or 5, wherein at least one of the devices is configured to receive radio frequency signals transmitted by the aircraft comprising at least some of the incoming data.

7. Apparatus according to claim 6, wherein the radio frequency signals comprise an identifier of the aircraft or of an emergency situation and the controller is configured to control operation of the display in dependence on the identifier.

8. Apparatus according to any one of claims 4 to 7, wherein controlling operation of the display comprises switching the display on or off or causing the display to display particular information.

9. Apparatus according to one of claims 4 to 8, wherein the controller is configured to control operation of one or more external devices in response to at least some of the incoming data.

10. Apparatus according to any preceding claim configured to display information relating to a status and/or identity of the landing area.

11. Apparatus according to any preceding claim comprising a further display for presenting information to a person on the ground and wherein the controller is configured to cause the further display to display at least some of the information displayed on the display.

12. Apparatus according to any preceding claim comprising:
a mount to enable the display to be mounted on a substantially horizontal surface, wherein the mount comprises:
a single leg attached to the display via a joint which allows an angle of the display relative to the leg to be adjusted; or
a plurality of legs, each of which has an adjustable length.

13. Apparatus according to any preceding claim wherein the display is made up of a plurality of interconnectable units.

14. Apparatus according to any preceding claim wherein the display is configured to present the information by way of non-visible light.

15. A method of using an apparatus according to any preceding claim, the method comprising:
positioning the display with a substantially horizontal orientation proximate to the landing area for the aircraft;
causing the interface to receive the sensor data from the one or more meteorological sensors; and
causing the display to display the information relating to the sensor data.
